## Europäisches Patentamt
## European Patent Office
## Office européen des brevets

(19)

(11) Numéro de publication : **0 091 849**
**B1**

(12)

# FASCICULE DE BREVET EUROPÉEN

(45) Date de publication du fascicule du brevet :
09.08.89

(51) Int. Cl.⁴ : **G 06 K   9/20**

(21) Numéro de dépôt : 83400627.2

(22) Date de dépôt : 25.03.83

(54) Procédé de lecture d'un texte imprimé par une tête à aiguille et tête de lecture pour la mise en oeuvre du procédé.

(30) Priorité : 08.04.82 FR 8206210

(43) Date de publication de la demande :
19.10.83 Bulletin 83/42

(45) Mention de la délivrance du brevet :
09.08.89 Bulletin 89/32

(84) Etats contractants désignés :
AT BE CH DE GB IT LI LU NL SE

(56) Documents cités :
EP–A– 0 022 397
FR–A– 1 555 323
FR–A– 2 286 445
FR–A– 2 386 867
GB–A– 2 085 209
PATENTS ABSTRACTS OF JAPAN, vol. 6, no. 125 (P-127)[1003], 10 juillet 1982; & JP-A-57 50 075 (TOKYO SHIBAURA DENKI K.K.) 24-03-1982 (Cat. A)
IBM TECHNICAL DISCLOSURE BULLETIN, vol. 15, no. 1, juin 1972, pages 63,64, New York, US; W.H. GLANTZ et al.: "Vertical normalization technique"

(73) Titulaire : Gascuel, Jean-Paul
6, Rue du Val-de-Grâce
F-75005 Paris (FR)

Rivaillier, Jacques
26, rue Mars Cressely
F-78470 Saint-Rémy-les-Chevreuses (FR)

(72) Inventeur : Gascuel, Jean-Paul
6, Rue du Val-de-Grâce
F-75005 Paris (FR)
Inventeur : Rivaillier, Jacques
26, rue Mars Cressely
F-78470 Saint-Rémy-les-Chevreuses (FR)

(74) Mandataire : CABINET BONNET-THIRION
95 Boulevard Beaumarchais
F-75003 Paris (FR)

## Description

L'invention se rapporte à un procédé de lecture de texte imprimé au moyen d'une tête mosaïque, où l'on explore par un processus électro-optique une zone de ligne d'impression suivant deux balayages croisés, longitudinal et transversal, avec des fréquences en rapports rationnels, et l'on élabore à partir de cette exploration un signal numérique qui reproduit le signal qui a commandé l'impression. L'invention vise aussi une tête de lecture pour la mise en œuvre du procédé.

La version électromécanique la plus courante des têtes d'impression mosaïque est la tête à aiguilles, dont le fonctionnement est typique du processus d'impression mosaïque.

Ces têtes d'impression à aiguille, qui sont les dispositifs électromécaniques d'impression qui permettent, à l'heure actuelle, les vitesses d'impression les plus grandes, comportent une pluralité d'aiguilles cylindriques adjacentes disposées avec leurs axes alignés transversalement par rapport à la ligne, la tête se déplaçant à vitesse sensiblement uniforme suivant la direction de la ligne ; l'impression est produite par la saillie de certaines aiguilles, qui appuient contre la feuille support une bande transfert. A un instant donné où sera commandée la saillie d'aiguilles, à chaque aiguille correspond un emplacement de point, dont l'ensemble pour la multiplicité constitue un corps de caractère. La saillie de plusieurs aiguilles cause l'impression des points correspondants, dont la disposition définit la structure du corps. La saillie des aiguilles pour l'impression d'un corps s'effectue en réponse à un segment de signal de commande, comportant une pluralité de moments binaires dont la succession correspond à la structure du corps. La succession des corps s'effectue avec un écartement axial réglé à un diamètre d'emplacement. En impression alphanumérique, chaque caractère est formé par un certain nombre de corps accolés, souvent une pluralité de corps, dont les premiers et les derniers sont vides pour former les intervalles entre caractères.

Mais d'autres types d'impression sont possibles. Notamment il peut être prévu des impressions codées, du genre décrit dans la demande de brevet français n° 79 16525 publiée le 16 janvier 1981 sous le numéro 2 459 725 et correspondant au EP-A-0 022 397, où chaque corps représente un caractère en code A.S.C.I.I. avec des informations complémentaires de rythme et de parité. Cette impression codée est prévue en marge d'une impression alphanumérique pour doubler sous forme concentrée le texte en clair, et permettre la lecture de ce texte sous une forme directement exploitable.

Néanmoins on se souviendra que l'impression alphanumérique est commandée à partir d'un signal codé en segments à pluralité de moments, à travers des matrices de transcodage telles qu'à un segment de signal corresponde le nombre de corps où s'inscrit le caractère alphanumérique. Aussi la lecture d'un texte alphanumérique ne diffère-t-elle pas essentiellement de celle d'un texte codé, une exploration corps par corps dans la surface occupée par un caractère donnant naissance à un signal en correspondance biunivoque avec le signal de commande d'impression.

Le processus qui paraît immédiat pour effectuer la lecture d'un texte composé d'une succession de corps de caractères, chaque corps constitué d'une pluralité d'emplacements de points circulaires dont la disposition des points imprimés correspond à une structure déterminée, consiste à explorer en succession les emplacements d'un corps, pour reconnaître quels sont les emplacements occupés par un point imprimé, et les corps de la ligne, en déterminant la réflectance différente des emplacements imprimés ou vierges, la résolution de l'exploration étant celle de l'impression.

Or ce processus de lecture, à priori séduisant par sa simplicité, se révèle inutilisable car il suppose que les emplacements explorés soient en stricte concordance de position avec les emplacements correspondants lors de l'impression, c'est-à-dire que, suivant la terminologie de l'imprimerie, le registre soit parfait aussi bien dans le sens des lignes qu'en travers. Ceci ne pourrait être obtenu qu'à condition que les erreurs de coïncidence entre la trame d'impression et la trame de lecture soient, en tous points de support, inférieures à une fraction relativement faible du diamètre d'emplacement. A titre indicatif le diamètre des aiguilles est souvent de l'ordre d'un demi-millimètre, et l'on admet comme tolérable une erreur de registre maximale de 20 % d'un diamètre d'aiguille, soit 0,1 mm. Comme en format de support A4 le cadre normal d'impression mesure 257 × 170 mm, soit 500 emplacements en vertical et 350 en horizontal, approximativement, il suffit d'une erreur systématique de registre de 0,2 micromètre par emplacement pour arriver en fin de page à l'erreur maximale admissible, et d'une erreur aléatoire de 6 micromètres, en admettant la proportionnalité de l'erreur totale avec la racine carrée du nombre d'événements entachés de l'erreur aléatoire.

En outre il se présente d'autres causes d'erreurs, telles que la présence de taches foncées dans le support à un emplacement vierge, ou un manque d'impression dans une partie d'un point imprimé. Ces défauts d'impression se traduisent par une réduction du contraste, en analyse globale de l'emplacement. D'ailleurs, en analyse globale du point, la détermination de la réflectance ne fournit qu'une information analogique, entachée de bruit par chaque cause d'erreur, de sorte que le classement logique de l'un des deux états « 1 » ou « 0 » perd de sa fiabilité par l'accumulation des causes d'erreur.

L'invention a pour objet un procédé de lecture de textes imprimés au moyen d'une tête à aiguille, qui supporte et compense des erreurs de registre.

L'invention a également pour objet un tel procédé de lecture qui prend en compte séparément les différentes erreurs d'impression, pour les compenser séparément.

A ces effets l'invention propose un procédé de lecture de texte imprimé au moyen d'une tête mosaïque définissant le long d'une ligne une succession de corps de caractères, chaque corps constitué d'une pluralité d'emplacements de points circulaires alignés en travers de la ligne, la disposition des points imprimés d'un corps définissant sa structure, où l'on explore par un processus électro-optique une zone de ligne suivant deux balayages croisés, longitudinal et transversal, avec des fréquences en rapport rationnel, et l'on élabore à partir de cette exploration un signal constitué de segments à pluralité de moments correspondant respectivement aux corps et emplacements en sorte de reproduire le signal qui a commandé l'impression, caractérisé en ce que, au moins le premier corps imprimé de ligne possédant une structure clé fixée, on explore la zone de ligne par grains élémentaires à entr'axe d'un pas, le balayage transversal s'effectuant à un rythme d'horloge en une période sur une colonne comprenant une multiplicité de grains tandis que le balayage longitudinal s'effectue au rythme des périodes, la longueur de colonne excédant celle d'un corps de marges de registre supérieure et inférieure, et le nombre de pas sur un diamètre d'emplacement définissant un facteur de grain, on met en forme logique le signal d'exploration avec des états « 1 » et « 0 » correspondant respectivement à la présence ou l'absence d'impression dans le grain correspondant, en sorte de constituer une suite de blocs à multiplicité d'états en correspondance avec les périodes, on compte le nombre d'états « 1 » dans chaque bloc, on détermine la différence entre ce nombre et celui du bloc précédent, et on mémorise le bloc précédent lorsque cette différence devient négative, pour les corps à structure clé, on analyse le bloc mémorisé à travers ladite structure clé en sorte d'enregistrer le nombre d'états « 0 » en début de bloc qui constitue la marge supérieure de registre de la ligne et d'aiguiller les états suivants du bloc par groupes à taille de facteur de grain dans une pluralité de cellules, ce processus d'aiguillage étant maintenu pour les blocs suivants en sorte de former ledit signal constitué de segments à pluralité de moments à partir des contenus desdites cellules.

On comprend que l'exploration de lecture s'effectue dans une trame plus fine que la trame d'impression, les résolutions tant longitudinale que transversale étant multipliées respectivement par le facteur de grain. L'erreur de conversion analogique/logique n'est pas sensiblement modifiée par l'exploration à trame fine. Par contre le comptage du nombre d'états « 1 » dans un bloc, avec soustraction du nombre compté dans le bloc précédent permet de déceler le bloc qui contient le maximum d'états « 1 » et de le mémoriser, ce bloc correspondant à une exploration sensiblement axiale du corps, indépendamment du registre en ligne. Par ailleurs la détermination de la marge de registre supérieure au moins sur le premier bloc mémorisé en correspondance avec la structure clé permet de réajuster la marge de registre à chaque ligne, et de supprimer en conséquence le risque d'erreur cumulative. Enfin l'aiguillage des groupes d'états vers des cellules correspondant par leur taille de facteur de grain et leur disposition par rapport à la marge de registre supérieure, chacune à un moment du segment de signal, permet la détermination de la nature du moment résultant du contenu de la cellule, le moment étant « 1 » si la majorité des états dans la cellule sont des états « 1 », et « 0 » si la majorité des états sont des états « 0 ».

De préférence la mise en forme logique se fait en appliquant le signal brut d'exploration à un comparateur avec un seuil réglé par rapport à l'amplitude maximale de signal brut.

De préférence, en analysant, pour les corps à structure clé, le bloc mémorisé à travers la structure clé on détermine un facteur de grain entier, et on ajuste en conséquence la taille des groupes d'états aiguillés vers les cellules. Pratiquement on peut ainsi compenser partiellement des variations de dimension des corps. Le facteur de grain entier peut se calculer en divisant le nombre d'états « 1 » du bloc par le nombre de moments « 1 » de la structure clé, et on arrondit le quotient à l'entier le plus proche.

En disposition préférée, pour former le signal constitué de segments à pluralité de moments, dans chaque cellule on compte les états « 1 » et on décompte les états « 0 », et on émet un moment correspondant à un point imprimé ou non suivant que le résultat de compte/décompte est positif ou non.

Selon un autre aspect l'invention propose une tête de lecture pour la mise en œuvre du procédé défini ci-dessus, montée sur un bâti en sorte d'être mobile devant un support de texte imprimé dans la direction générale des lignes tandis qu'après lecture d'une ligne le support est déplacé pour amener la ligne suivante en regard de la tête, la succession des mouvements d'organes correspondant aux mouvements effectués à l'impression par une tête à aiguille, caractérisée en ce qu'elle comporte un réseau aligné de photodiodes adjacentes, des éléments optiques tels qu'une image d'une bande de support de texte, transversale à la ligne vienne se former sur le réseau en couvrant une multiplicité de photodiodes, des moyens d'éclairage du support de texte avec un éclairement sensiblement uniforme de la bande, et des moyens d'exploration séquentielle du réseau, pilotés par une horloge, un cycle d'exploration du réseau définissant la période du signal d'exploration, et en ce que le déplacement de la tête de lecture est piloté au rythme des périodes avec un pas égal à la largeur de bande.

Les caractéristiques et avantages de l'invention ressortiront d'ailleurs de la description qui va suivre à titre d'exemple, en référence aux dessins annexés dans lesquels :

la figure 1 est un schéma général d'une tête de lecture selon l'invention, en forme de diagramme ;

la figure 2 est un schéma de l'analyse d'un corps ;

la figure 3 est un schéma de circuit de mise en forme logique de signaux d'exploration ;

la figure 4 est un schéma de circuit pour l'ajustage du facteur de grain ;

la figure 5 est un diagramme de validation de prise en compte d'un résultat d'exploration ;

la figure 6 est un schéma d'identification de point imprimé.

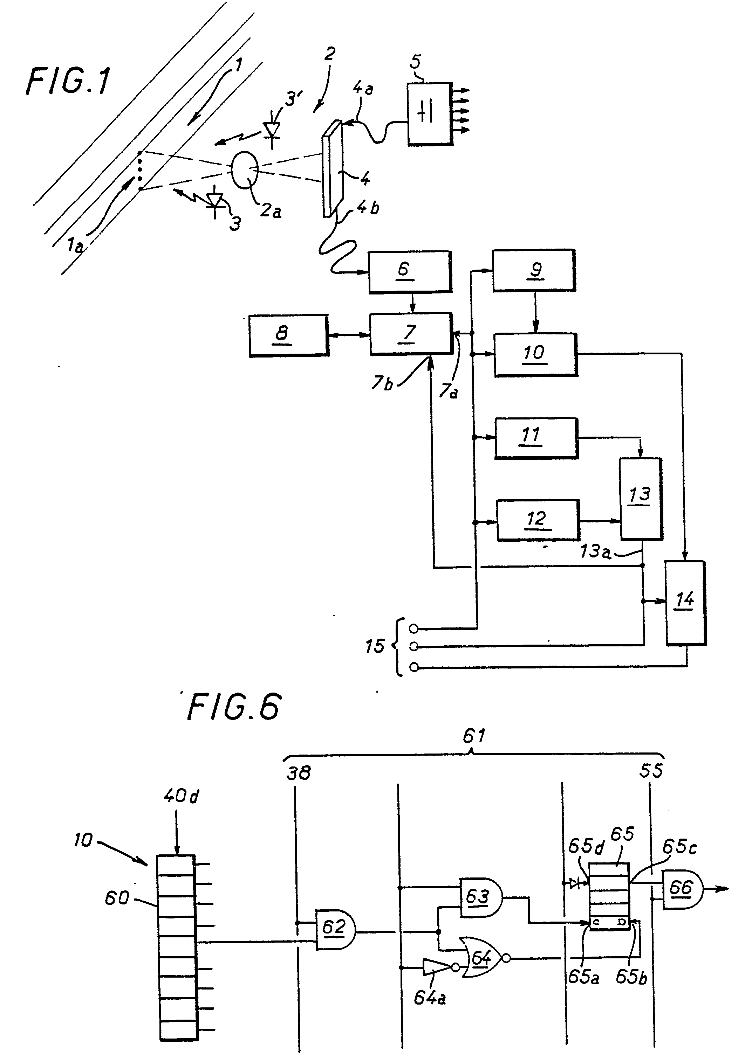

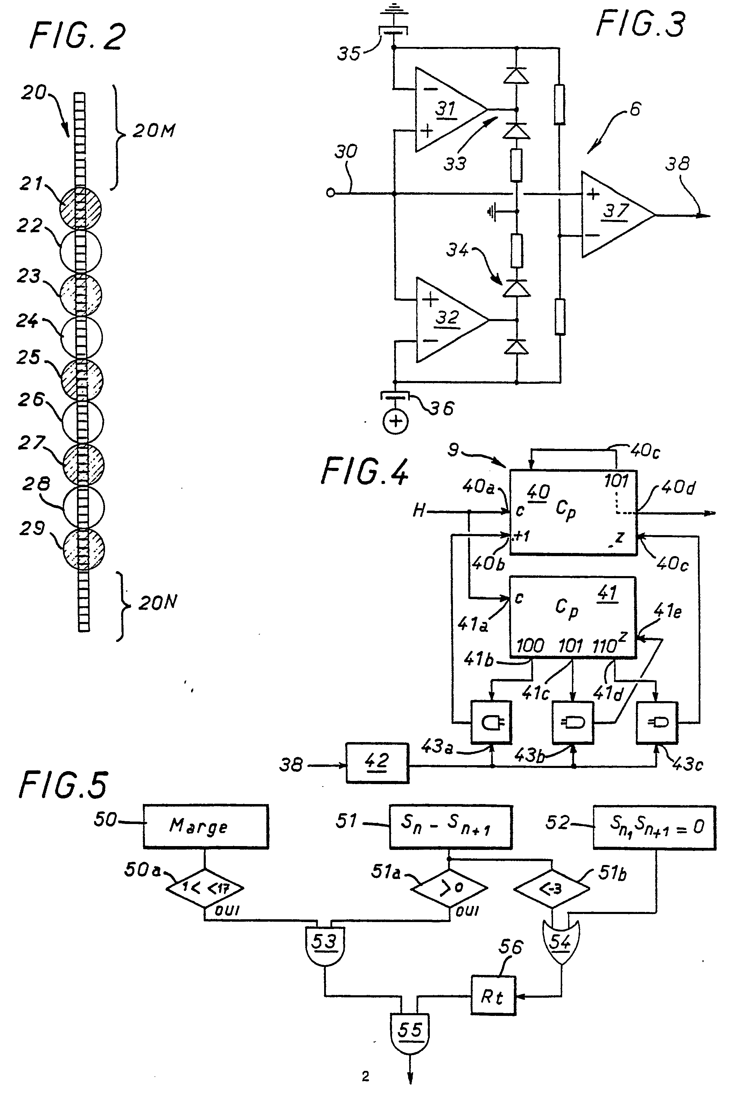

Selon la forme de réalisation choisie et représentée figure 1, pour lire une impression mosaïque sur un support 1, on fait défiler le long d'une ligne, dans la direction et le sens de la flèche 1a, une tête de lecture 2 dans son ensemble qui comprend un objectif 2a, des diodes électroluminescentes 3 et 3' pour éclairer le support 1, et un réseau de photodiodes 4, comportant un alignement de 64 photodiodes. L'objectif 2a projette l'image d'une bande allongée, transversale à la ligne 1a, sur le réseau 4. Le réseau 4 est muni de moyens d'exploration tels que, au rythme des impulsions d'une horloge 5, appliquées à une entrée d'horloge 4a du réseau 4, apparaisse sur la sortie 4b un signal représentatif de l'état de chaque photodiode, en succession cyclique. Ce signal est appliqué à un étage 6 de mise en forme logique, qui sera décrit plus en détail en référence à la figure 3, en sorte que le signal correspondant à l'exploration d'une photodiode qui reçoit l'image d'une zone imprimée soit à un niveau logique 1, tandis que celui qui correspond à l'exploration d'une photodiode qui reçoit l'image d'une zone non imprimée est à un niveau logique 0. La vitesse d'avance de la tête suivant la flèche 1a est corrélée avec la période d'horloge 5 de telle sorte que deux explorations successives du réseau 4 correspondent à deux bandes contiguës sur le support 1. La zone dont l'image recouvre une photodiode du réseau 4 est un grain d'image.

En se référant à la figure 2, la bande 20 correspond à une exploration, à 64 grains, d'un corps de caractère à 9 emplacements 21 à 29, dont la structure est formée par l'alternance de points imprimés et d'emplacements vides, soit 5 points à référence impaire et 4 emplacements vides à référence paire. Les emplacements vides ont été représentés cerclés pour faciliter la compréhension, mais en pratique ces emplacements sont virtuels.

Les 11 premiers grains, 20 M, constituent la marge de registre supérieure, et les 8 derniers grains 20 constituent la marge de registre inférieure. A chaque emplacement correspondent 5 grains, 12-16, 22-26, 32-36, 42-46 et 52-56 pour les grains situés sur des zones imprimées, points 21, 23, 25, 27, 29 ; 17-21, 27-31, 37-41, et 47-51 pour les grains situés sur des zones non imprimées. Le signal d'exploration forme un bloc à 64 états, les états de rang 1-11, 17-21, 27-31, 37-41, 47-51 et 57-64 sont des états « 0 ».

Comme on le voit figure 3, le circuit 6 comporte deux détecteurs de valeurs extrêmes composé chacun d'un amplificateur différentiel 31 et 32, un pont de deux diodes 33, 34 et un condensateur d'intégration 35, 36. Le condensateur 35 se charge au niveau maximum de tension d'exploration appliquée à la borne 30 correspondant aux grains imprimés, tandis que le condensateur 36 se charge au minimum de tension correspondant aux grains vides. La tension d'exploration est également appliquée à l'entrée directe d'un amplificateur différentiel 37, monté en comparateur à seuil, dont l'entrée inverseuse reçoit une tension moyenne des tensions de charge des condensateurs 35 et 36.

Ainsi tous les grains plus sombres que la moyenne brillance seront dotés d'un état « 1 », et tous les grains plus clairs que la moyenne, d'un état « 0 ».

En revenant à la figure 1, le signal mis en forme dans le circuit 6, est analysé pour déterminer la marge de registre supérieure dans le circuit 7 couplé à une mémoire 8. Pour ce faire, en début d'impression de ligne on a prévu un corps à structure clé (imprimé dans une marge de côté par où commence la lecture, et qui peut être le premier corps d'un enregistrement codé tel qu'il a été décrit (sans corps à structure clé) dans la demande de brevet français 79 16525, publiée sous le numéro 2 459 725). La structure clé débute obligatoirement par un point imprimé 21 en dessous de la marge supérieure de registre 20 M, et est de préférence celle représentée figure 2, qui s'exprime en signal à neuf moments 101010101. En début d'exploration de ligne, les blocs reçus du circuit 6 sont retransmis sur la sortie 7a du circuit à partir du premier état « 1 », pour attaquer notamment les circuits 11 et 12, qui commandent le tri des signaux. Le circuit 11 compte, pour chaque bloc reçu le nombre des états « 1 », et fait la différence entre le nombre compté actuel et le nombre compté du bloc immédiatement précédent. Lorsque cette différence devient négative, le circuit 11 arme le circuit de validation 13, qui émet un signal de validation (un état « 1 ») sur sa sortie 13a. Par ailleurs, dans le circuit 7, ont été comptés les états « 0 » du bloc, précédant le premier état « 1 », c'est-à-dire les états « 0 » correspondant à la marge de registre supérieure. Le signal de validation apparaissant sur l'entrée 7b commande l'entrée en mémoire 8 de la valeur de la marge de registre, valeur qui sera rappelée à chaque balayage ultérieur le long de la ligne, pour transmettre sur la sortie 7a les blocs suivants tronqués de la marge de registre gardée en mémoire, que le bloc tronqué débute par un état « 0 » ou un état « 1 ».

Si chaque corps commence par un point noir (base de temps fixe, piste 1 en bout) le calcul de la marge et le calage correspondant peuvent se faire tout au long de la ligne (indispensable dans le cas de lignes pentues ou ondulées).

Le circuit 12 effectue des opérations de comptage analogues à celles du circuit 11 ; toutefois il émet un signal en direction du circuit de validation 13 lorsque la différence entre le nombre d'états « 1 » d'un bloc actuel et le nombre relatif au bloc immédiatement précédent est devenue positive, et supérieure à 3. Le signal émis par le circuit 12 rend le circuit de validation 13 susceptible de redevenir sensible à un signal émis par le circuit 11 pour émettre un signal de validation. On comprend que la croissance de la différence de nombre d'états « 1 » dans deux blocs successifs correspond à l'instant où le balayage d'exploration commence à prendre en compte un nouveau corps, tandis que l'instant où la différence devient négative est celui où le balayage est centré sur le corps.

Le bloc tronqué parvient aux circuits 9 et 10, affectés respectivement à la détermination du facteur de grain, et au classement des états en cellules, chaque celle étant composée d'états successifs en nombre égal au facteur de grain. On appelle facteur de grain le nombre de grains qui couvrent un emplacement de point imprimé. Ce facteur de grain est prévu de 5 mais peut fluctuer entre 4 et 6, selon les conditions d'impression. Lorsqu'un point est maigre le facteur de grain est inférieur à 5 ; lorsqu'il est gras le facteur de grain est supérieur à 5.

Comme on le voit à la figure 4, le circuit 9 comprend un premier compteur 40, monté en compteur cyclique à 5, le signal de fin de cycle apparaissant sur la sortie 40d, ce compteur recevant sur son entrée de comptage 4a des impulsions d'horloge à partir de la transmission du bloc, après troncage de la marge de registre supérieure. Un second compteur 4 reçoit les mêmes impulsions d'horloge sur son entrée de comptage. Des signaux apparaissent sur les sorties 41c, 41b et 41d du compteur 41 lorsque le contenu de ce compteur est respectivement un multiple de 5, un multiple de 5, — 1 et un multiple de 5, + 1. Le conducteur 38, qui reçoit le signal mis en forme logique, attaque un différenciateur 42 qui émet une impulsion lorsque le signal passe d'un état « 0 » à un état « 1 », ou d'un état « 1 » à un état « 0 ». Aux sorties 41b, 41c et 41d du compteur 41 sont reliées les premières entrées de trois circuits détecteurs de coïncidence 43a, 43b, 43c respectivement, les secondes entrées de ces circuits étant reliées en commun à la sortie du circuit 42.

Les sorties des circuits de coïncidence 43a, 43b, 43c sont reliées respectivement, à une entrée 40b du compteur 40, entrée qui ajoute une unité au contenu de ce compteur, à une entrée 41e de remise à zéro du compteur 41, et une entrée 40c de remise à zéro du compteur 40. Ainsi, si les transition se produisent pour un multiple par 5 exact d'impulsions d'horloge, des signaux apparaîtront sur la sortie 40d toutes les 5 impulsions, marquant ainsi les frontières des emplacements de points. Le compteur 41 est remis à zéro par le circuit 43b à chaque transition juste. Si par contre la transition se produit une période d'horloge trop tôt, le circuit 43a, activé, réintroduit la période manquante dans le compteur 40. En outre, si la transition est trop tardive, d'une période d'horloge, le circuit 43c est activé, et remet à zéro le compteur 40, annulant ainsi la période en excès.

Comme on le voit à la figure 6, le circuit 10, pour classer les états des blocs en cellules, comporte un compteur en anneau à neuf positions, qui reçoit par le conducteur 40d la sortie du compteur cyclique 40 de la figure 4, et qui commande en réponse l'entrée de neuf cellules, dont une seule, 61 dans son ensemble est représentée. Cette cellule 61 comprend en entrée une porte ET 62, attaquée sur une entrée par la sortie correspondante du compteur an anneau 60, et sur l'autre par le signal sortant de l'étage de mise en forme, sur le conducteur 38 de la figure 3. Sur la sortie de cette porte ET 62 apparaissent les états du bloc en cours d'exploration, correspondant à la cellule 61 activée. Le signal de sortie de la porte 62 est appliqué à une entrée d'une porte ET 63, et à une entrée d'une porte NON-OU 64, la seconde entrée de la porte 63 étant attaquée par les signaux d'horloge, et la seconde entrée de la porte NON-OU 64 étant attaquée par le complément de ces signaux d'horloge, ceux-ci étant appliqués à travers un inverseur logique 64a. En sortie de la porte 63 apparaissent des signaux d'horloge lorsque des états « 1 » sont présents sur la ligne 38, et les signaux d'horloge apparaissent sur la sortie de la porte 64 si des états « 0 » sont présents sur la ligne 38.

Un compteur à 5 étages binaires 65 est attaqué sur une entrée de comptage 65a attaquée par la sortie de la porte ET 63, tandis que la sortie de la porte NON-OU 64 attaque une entrée de décomptage 65b de ce compteur 65. Une impulsion d'initialisation introduit un 1 sur le troisième étage du compteur 65, les autres étages étant à zéro ; ceci revient à charger le compteur avec un contenu 8 (1 000 en binaire). Après cinq impulsions d'horloge, la cellule suivante est excitée. A ce moment le contenu du compteur est, si p états « 1 » ont été pris en compte $8 + p - (5 - p) = 2p + 3$. Si le nombre d'états « 1 » est de 3 ou plus, le contenu final sera de 9 ou plus ; le quatrième étage sera à l'état « 1 » ; par contre si le nombre d'états « 1 » est de deux ou moins, le contenu final sera de 7 ou moins, et le quatrième étage sera à l'état « 0 », autrement dit ce quatrième étage sera dans l'état de la majorité des états de la cellule. La sortie du quatrième étage du compteur 65 est reliée à une entrée d'une porte ET 66, dont la seconde entrée reçoit des impulsions de validation. La sortie de la porte 66 attaque une position d'une mémoire à 9 positions, 14 de la figure 1. On comprend que la lecture de la mémoire 14 donnera un segment de signal à 9 moments, ces moments étant « 1 » ou « 0 » selon que le dispositif a identifié un point imprimé, ou un emplacement vide, en prenant pour critère de valeur de moment que la majorité des grains d'exploration de l'emplacement correspond à la réflectance de l'impression, ou à la réflectance du support.

Le processus de validation va être précisé en référence à la figure 5. En 50 est inscrit le nombre d'états « 0 » qui constitue la marge supérieure de registre ; un comparateur numérique 50a émet un signal en sortie lorsque le nombre d'états de la marge est compris entre 1 et 17. En 51 est calculée la différence entre le nombre d'états « 1 » dans le bloc analysé immédiatement précédemment, et le bloc actuel. Deux comparateurs 51a et 51b sont sensibles à cette différence, le comparateur. 51a émettant un signal lorsque la différence est positive, et le comparateur 51b lorsque cette différence est inférieure à — 3 (donc négative et supérieure à 3 en valeur absolue). Les sorties des comparateurs 50a et 51a sont appliquées conjointement à une porte ET 53, dont la sortie attaque une entrée d'une porte ET 55.

En 52, un circuit à mémoire émet un signal lorsque deux blocs successifs ont été nuls. La sortie de ce circuit 52, conjointement avec celle du comparateur 51b, est appliquée à une porte OU 54, dont la sortie attaque un circuit à retard 56, sur la sortie duquel apparaît un signal, après qu'il ait reçu un signal de la porte OU 54. Ce circuit à retard 54 attaque la seconde entrée de la porte ET 55, dont la sortie délivre le signal de validation.

On comprendra que le signal de validation est émis lorsque, la marge de registre supérieure ayant une valeur qui assure pratiquement que 45 grains couvriront 9 emplacements de point, le nombre d'états « 1 » des blocs successifs a franchi un maximum (exploration centrée), à condition que, en outre, ce nombre se soit précédemment accru franchement, ce qui signifie que le bord du corps exploré se soit franchement signalé, ou que deux explorations successives n'aient pas fait apparaître d'état « 1 », ce qui est significatif d'un blanc précédant le corps.

On appréciera que, par lecture de la mémoire 14 (figure 1) on rétablira un signal formé de segments à 9 moments, chaque segment étant représentatif de la structure d'un corps de caractère, et reconstituant le signal qui a été appliqué à la tête mosaïque pour imprimer ce corps, malgré des erreurs de registre. On appréciera également que chaque segment de signal de sortie est émis au rythme d'avance de la tête, pratiquement indépendamment du rythme d'exploration. En effet, s'il est clair qu'un balayage trop rapide suivant la direction de la flèche 1a (figure 1), qui laisserait des bandes inexplorées entre deux explorations transversales successives, risquerait d'entraîner des lectures défectueuses, un ralentissement ou même un arrêt de balayage suivant la direction 1a de la ligne n'a pour effet qu'une redondance des données analysées, sans conséquence sur le signal de sortie.

On comprendra par ailleurs que la description a été simplifiée en omettant de préciser ce qui relève des structures de circuits à la portée d'un homme du métier, ainsi que les processus informatiques de transferts de données, de calcul de différences numériques, de comparaisons numériques. Egalement la description a été volontairement limitée à la reconstitution du signal de commande de l'impression, car l'utilisation de ce signal reconstitué peut être quelconque, enregistrement, codage, recopie notamment.

Sous un autre aspect, on notera que l'analyse de l'ensemble des blocs d'état relevés sur des corps de caractère choisis en sorte que chaque position d'impression de la tête mosaïque soit identifiable permet une appréciation de la qualité d'impression de la tête (diamètre des points, alignements et déports transversaux).

Bien entendu l'invention n'est pas limitée aux exemples décrits mais en embrasse toutes les variantes d'exécution comprises dans les revendications.

## Revendications

1. Procédé de lecture de texte imprimé au moyen d'une tête mosaïque, définissant le long d'une ligne une succession de corps de caractères, chaque corps constitué d'une pluralité d'emplacements de points circulaires alignés en travers de la ligne, la disposition des points imprimés d'un corps définissant sa structure, où l'on explore par un processus électro-optique une zone de ligne suivant deux balayages croisés, longitudinal et transversal, avec des fréquences en rapport rationnel, et l'on élabore à partir de cette exploration un signal constitué de segments à pluralité de moments correspondant respectivement aux corps et emplacements en sorte de reproduire le signal qui a commandé l'impression, procédé caractérisé en ce que, au moins le premier corps imprimé de ligne possédant une structure clé fixée, on explore la zone de ligne par grains élémentaires à entr'axe d'un pas, le balayage transversal s'effectuant à un rythme d'horloge en une période sur une colonne comprenant une multiplicité de grains tandis que le balayage longitudinal s'effectue au rythme des périodes, la longueur de colonne excédant celle d'un corps de marges de registre supérieure et inférieure, et le nombre de pas sur un diamètre d'emplacement définissant un facteur. de grain, on met en forme logique le signal d'exploration avec des états « 1 » et « 0 » correspondant respectivement à la présence ou l'absence d'impression dans le grain correspondant, en sorte de constituer une suite de blocs à multiplicité d'états en correspondance avec les périodes, on compte le nombre d'états « 1 » dans chaque bloc, on détermine la différence entre ce nombre et celui du bloc précédent, et on mémorise le bloc précédent lorsque cette différence devient négative, pour les corps à structure-clé, on analyse le bloc mémorisé à travers ladite structure-clé en sorte d'enregistrer le nombre d'états « 0 » en début de bloc qui constitue la marge supérieure de registre de la ligne et d'aiguiller les états suivants du bloc par groupes à taille de facteur de grain dans une pluralité de cellules, ce processus d'aiguillage étant maintenu pour les blocs suivants en sorte de former ledit signal constitué de segments à pluralité de moments à partir des contenus desdites cellules.

2. Procédé suivant la revendication 1, caractérisé en ce que, pour mettre en forme logique le signal d'exploration, on applique le signal brut d'exploration à un comparateur avec un seuil réglé par rapport à l'amplitude maximale de signal brut.

3. Procédé suivant une des revendications 1 et 2, caractérisé en ce qu'on détermine un facteur de grain entier, et on ajuste en conséquence la taille des groupes d'états aiguillés vers lesdites cellules.

4. Procédé suivant la revendication 3, caractérisé en ce que, pour déterminer un facteur de grain entier, on compte le nombre d'états « 1 » successifs, et le nombre d'états « 0 » successifs dans le bloc, on compare à un multiple entier de facteur de grain normal, et on ajoute ou retranche un état dans les successions selon que la différence avec ledit multiple entier est un excès ou un défaut.

5. Procédé suivant une quelconque des revendications 1 à 4, caractérisé en ce que, pour former ledit signal constitué de segments à pluralité de moments, dans chaque cellule on compte les états « 1 », et on décompte les états « 0 », et on émet un moment correspondant à un point imprimé ou non selon que le résultat de compte/décompte est positif ou non.

6. Tête de lecture de texte imprimé au moyen d'une tête mosaïque, définissant le long d'une ligne une succession de corps de caractères, chaque corps constitué d'une pluralité (21-29) d'emplacements de points circulaires alignés en travers de la ligne, la disposition des points imprimés d'un corps définissant sa structure, tête de lecture (2) montée sur un bâti en sorte d'être mobile devant un support de texte (1) dans la direction générale des lignes (1a) tandis qu'après lecture d'une ligne, le support est déplacé pour amener la ligne suivante en regard de la tête (2), la succession des mouvements d'organes correspondant aux mouvements effectués à l'impression par une tête mosaïque, la tête de lecture (2) comportant un réseau (4) aligné de photodiodes (20) adjacentes, des éléments optiques (2a) tels qu'une image d'une bande de support de texte, transversale à la ligne, vienne se former sur le réseau (4) en couvrant une multiplicité de photodiodes (20), des moyens d'éclairage (3, 3') du support de texte (1) avec un éclairement sensiblement uniforme de la bande, et des moyens d'exploration (5) séquentiels du réseau émettant un signal d'exploration, un cycle d'exploration du réseau définissant la période du signal d'exploration, caractérisée en ce que le déplacement de la tête de lecture (2), effectué par incréments d'un pas égal à la largeur de bande, est piloté au rythme des périodes, en ce que le signal d'exploration est transmis à un étage de mise en forme logique (6) à sortie à deux états « 1 » et « 0 », cet étage comprenant deux détecteurs de valeurs extrêmes (31, 32) sensibles au signal d'exploration, et un comparateur à seuil (37) sensible à la différence entre la valeur instantanée du signal d'exploration et la moyenne des valeurs extrêmes détectées par les deux détecteurs (31, 32), et en ce que le signal mis en forme logique est appliqué à des circuits comportant des moyens de détermination (7) d'une marge de registre supérieur couplés à une mémoire (8) des premiers moyens de tri (11) aptes à compter le nombre d'états « 1 » dans un bloc correspondant à une période, à comparer le nombre d'états « 1 » dans un bloc au nombre dans le bloc précédent, et émettre un signal d'armement en direction d'un circuit de validation (13), celui-ci émettant en réponse un signal de validation, des seconds moyens de tri (12) aptes à compter le nombre d'états « 1 » dans un bloc, à comparer ce nombre d'états « 1 » à celui du bloc précédent, et à émettre en direction du circuit de validation (13) pour le sensibiliser au signal d'armement émis par les premiers moyens de tri (11) lorsque la différence entre les nombres d'états dans les blocs est devenue positive et supérieure à trois, des moyens de détermination de facteur de grain (9) apte à déterminer un nombre entier moyen d'états correspondant à un emplacement de point circulaire, des moyens de classement (10) couplés aux moyens de détermination de facteur de grain (9) et aptes à répartir les états par groupes à taille de facteur de grain, à compter les états « 1 » dans chaque groupe et à émettre en réponse, pour chaque groupe successivement, un état « 1 » si plus de la moitié des états dans le groupe sont des états « 1 », et un état « 0 » dans le cas contraire.

## Claims

1. Method of reading a text printed by means of a mosaic head defining, along a line, a succession of character bodies, each body consisting of a number of circular dot locations aligned across the line, the arrangement of the printed dots of a body defining its structure, in which, by an electro-optical process, a line area is scanned in two crossing — longitudinal and transverse — sweeps, at rationally related frequencies, and from this scanning there is produced a signal consisting of multi-bit segments corresponding respectively to the bodies and locations so as to reproduce the signal which brought about the printing, a method characterised in that, as at least the first printed line body possesses a fixed key structure, the line area is scanned by elementary grains with an inter-axis spacing of one step, the transverse sweep taking place at a clock rate in a period on a column comprising a large number of grains while the longitudinal sweep takes place at the cadence of the periods, the column length exceeding that of a body of upper and lower register margins and the number of steps in a location diameter defining a grain factor, the scanning signal is put into logic form with « 1 » and « 0 » states corresponding respectively to the presence or absence of printing in the corresponding grain, so as to constitute a series of multi-state blocks corresponding to the periods, the number of « 1 » states in each block is counted, the difference between this number and that of the preceding block is determined, and the preceding block is stored when this difference becomes negative, for bodies with a key structure the block stored is analysed through the said key structure so as to record the number of « 0 » states at the block-beginning which constitutes the upper register margin of the line and to switch the following states of the block by groups of grain-factor size into a number of cells, this switching process being maintained for the following blocks in order to form the said signal consisting of multi-bit segments from the contents of the said cells.

2. A method as claimed in Claim 1, characterised in that, in order to put the scanning signal into logic form, the raw scanning signal is applied to a comparator with a threshold regulated in relation to the maximum raw-signal amplitude.

3. A method as claimed in either of Claims 1 and 2, characterised in that an integral grain factor is determined and the size of the state groups switched to the said cells is adjusted accordingly.

4. A method as claimed in Claim 3, characterised in that, in order to determine an integral grain factor, the number of successive « 1 » states and the number of successive « 0 » states in the block are counted, compared to an integral multiple of a normal grain factor, and a state is added or deducted in the successions depending on whether the difference from the said integral multiple is an excess or a shortfall.

5. A method as claimed in any one of Claims 1 to 4, characterised in that, in order to form the said signal consisting of multi-bit segments, in each cell the « 1 » states are counted up and the « 0 » states are counted down and a bit corresponding to a printed dot or not is emitted depending on whether the result of the counting up/counting down is positive or not.

6. A head for reading a text printed by means of a mosaic head, defining along a line a succession of character bodies, each body consisting of a number (21-29) of locations of circular dots aligned across the line, the arrangement of the printed dots of a body defining its structure, the said reading head (2) being mounted on a support member in such a way as to be mobile before a text medium (1) in the general direction of the lines (1a) while after the reading of a line the medium is moved in order to bring the next line opposite the head (2), the succession of the movements of organs corresponding to the movements made during printing by a mosaic head, the reading head (2) comprising an aligned network (4) of adjacent photodiodes (20), optical elements (2a) such that an image of a strip of text medium running across the line is formed on the network (4) covering a large number of photodiodes (20) thereof, means of illumination (3, 3') of the text medium (1) with approximately uniform illumination of the strip, and means (5) for sequential scanning of the network emitting a scanning signal, a scanning cycle of the network defining the period of the scanning signal, characterised in that the movement of the reading head (2), carried out by increments of one step equal to the strip width, is piloted in the cadence of the periods, in that the scanning signal is transmitted to a stage for putting into logic form (6) with an output with two states « 1 » and « 0 », this stage comprising two extreme-value detectors (31, 32) sensitive to the scanning signal, and a threshold comparator (37) sensitive to the difference between the instantaneous value of the scanning signal and the average of the extreme values detected by the two detectors (31, 32), and in that the signal put into logic form is applied to circuits comprising means for determination (7) of an upper register margin coupled to a memory (8), first sorting means (11) capable of counting the number of « 1 » states in a block corresponding to a period, of comparing the number of « 1 » states in a block with the number in the preceding block and of issuing an activating signal to a validation circuit (13), the latter emitting a validation signal in response, second sorting means (12) capable of counting the number of « 1 » states in a block, of comparing this number of « 1 » states with that of the preceding block and of emitting a signal to the validation circuit (13) in order to make it sensitive to the activating signal emitted by the first sorting means (11) when the difference between the numbers of states in the blocks has become positive and greater than three, grain-factor determination means (9) capable of determining an integral number of states corresponding to a circular dot location, filing means (10) coupled to the grain-factor determination means (9) and capable of distributing the states by groups of grain-factor size, of counting the « 1 » states in each group and of emitting in response, for each group successively, a « 1 » state if more than half the states in the group are « 1 » states and a « 0 » state in the opposite case.

**Patentansprüche**

1. Verfahren zum Lesen eines mit Hilfe eines Matrixkopfes gedruckten Textes, der längs einer Zeile eine Folge von Typenkörpern bildet, wobei jeder Körper aus mehreren kreisförmigen Punktstellen besteht, die quer zur Zeile in einer Reihe liegen, und die Anordnung der gedruckten Punkte eines Körpers seine Struktur definieren, in welchem in einem elektrooptischen Verfahren eine Zeilenzone in zwei gekreuzten Abtastungen, einer Längs- und einer Querabtastung, mit Frequenzen in einem rationalen Verhältnis abgetastet wird und ausgehend von dieser Abtastung ein Signal gebildet wird, das aus Segmenten mit mehreren Momenten besteht, die den Körpern bzw. Stellen entsprechen so daß das Signal, das den Druck gesteuert hat, wieder hergestellt wird, dadurch gekennzeichnet, daß, indem zumindest der erste gedruckte Zeilenkörper eine feste Schlüsselstruktur besitzt, die Zeilenzone in Grundkörnern mit dem Achsabstand eines Schritts abgetastet wird, wobei die Querabtastung in einem Taktgeberrhythmus in einer Periode auf einer aus mehreren Körnern bestehenden Spalte stattfindet, während die Längsabtastung im Rhythmus der Perioden stattfindet, wobei die Spaltenlänge die Länge eines oberen und unteren Registerrandkörpers überschreitet und die Anzahl Schritte auf einem Stellendurchmesser einen Kornfaktor darstellt, daß das Abtastsignal in logische Form mit Zuständen « 1 » und « 0 » gebracht wird, die dem Vorhandensein bzw. Fehlen eines Drucks im entsprechenden Korn entsprechen, so daß eine Folge von Blöcken von mehreren Zuständen in Übereinstimmung mit den Perioden gebildet werden, daß die Zahl der Zustände « 1 » in jedem Block gezählt wird, daß die Differenz zwichen dieser Zahl und der des vorhergehenden Blocks bestimmt wird, daß der vorhergehende Block gespeichert wird, wenn diese Differenz negativ wird, daß bei den Schlüsselstrukturkörpern der über diese Schlüsselstruktur gespeicherte Block analysiert wird, so daß die Zahl von Zuständen « 0 » am Blockbeginn registriert wird, der den oberen Registerrand der Zeile darstellt, und die folgenden Zustände des Blocks in Gruppen in der Größe des Kornfaktors in mehrere Zellen verteilt werden, wobei dieser Verteilungsprozeß für die folgenden Blöcke beibehalten wird, so daß dieses aus Segmenten mit mehreren Elementen bestehende Signal aus den Inhalten dieser Zellen gebildet wird.

2. Verfahren nach Anspruch 1, dadurch gekennzeichnet, daß zur Umformung des Abtastsignals in eine logische Form das Abtastrohsignal an einen Vergleicher mit einer Schwelle angelegt wird, die bezüglich der Höchstamplitude des Rohsignals eingestellt ist.

3. Verfahren nach einem der Ansprüche 1 und 2, dadurch gekennzeichnet, daß ein ganzer Kornfaktor bestimmt wird und daß entsprechend die Größe der den Zellen zugeleiteten Gruppen von Zuständen eingestellt wird.

4. Verfahren nach Anspruch 3, dadurch gekennzeichnet, daß zur Bestimmung eines ganzen Kornfaktors die Zahl von aufeinanderfolgenden Zuständen « 1 » und die Zahl von aufeinanderfolgenden Zuständen « 0 » in dem Block gezählt wird, mit einem ganzzahligen Vielfachen des normalen Kornfaktors verglichen wird und in den Folgen ein Zustand hinzugefügt oder abgezogen wird, je nachdem, ob die Differenz zu dem ganzzahligen Vielfachen positiv oder negativ ist.

5. Verfahren nach einem der vorhergehenden Ansprüche, dadurch gekennzeichnet, daß zur Formung dieses aus Segmenten mit mehreren Elementen bestehenden Signals in jeder Zelle die Zustände « 1 » gezählt und die Zustände « 0 » zurückgezählt werden und ein Element gesendet wird, das einem bedruckten oder nicht bedruckten Punkt entspricht, je nachdem, ob das Ergebnis der Zählung/Zurückzählung positiv oder nicht ist.

6. Kopf zum Lesen eines mit Hilfe eines Matrixkopfes gedruckten Textes, der längs einer Zeile eine Folge von Typenkörpern bildet, wobei jeder Körper aus mehreren Stellen von kreisförmigen Punkten (21-29) besteht, die quer zur Zeile in einer Linie liegen, und die Anordnung der gedruckten Punkte eines Körpers seine Struktur bestimmen, und zwar ein Lesekopf (2), der auf einem Gestell so montiert ist, daß er vor einem Textträger (1) in der allgemeinen Richtung der Zeilen (1a) beweglich ist, wobei der Träger nach Lesung einer Zeile bewegt wird, um die folgende Zeile vor den Kopf (2) zu bringen, wobei die Folge der Bewegungen von Organen den Bewegungen entspricht, die bei dem Druck von einem Matrixkopf ausgeführt werden, wobei der Lesekopf (2) ein in einer Linie liegendes Netz (4) von aneinander anliegenden Photodioden (20), optische Elemente (2a), durch die ein Bild eines zur Zeile in Querrichtung angeordneten Textträgerbandes auf dem Netz (4) geformt wird, indem es eine Vielzahl von Photodioden (20) bedeckt, Einrichtungen (3, 3') zum Beleuchten des Textträgers (1) mit einer im wesentlichen gleichmäßigen Beleuchtung des Bandes und sequentielle Einrichtungen (5) zum Abtasten des Netzes besitzt, die ein Abtastsignal aussenden, wobei ein Netzabtastzyklus die Periode des Abtastsignals bestimmt, dadurch gekennzeichnet, daß die Bewegung des Lesekopfes (2), die in Inkrementen mit einem Schritt von gleich der Bandbreite durchgeführt wird, im Rhythmus der Perioden gesteuert ist, daß das Abtastsignal auf eine Stufe (6) zur Umformung in logische Form mit einem Ausgang mit zwei Zuständen « 1 » und « 0 » übertragen wird, wobei diese Stufe zwei auf das Abtastsignal ansprechende Extremwert-Abtaster (31, 32) und einen Schwellenvergleicher (37) besitzt, der auf die Differenz zwischen dem momentanen Wert des Abtastsignals und dem Mittelwert der von den beiden Abtastern (31, 32) abgetasteten Extremwerten empfindlich ist, und daß das in logische Form gebrachte Signal an Schaltungen angelegt ist, bestehend aus : mit einem Speicher (8) gekoppelte Einrichtungen (7) zur Bestimmung eines oberen Registerrands, erste Sortiereinrichtungen (11), die die Zahl der Zustände « 1 » in einem einer Periode entsprechenden Block zählen, die Zahl der Zustände « 1 » in einem Block mit der Zahl in dem vorhergehenden Block vergleichen und ein Auslösesignal zu einer Freigabeschaltung (13) senden können, die als Antwort ein Freigabesignal sendet, zweite Sortiereinrichtungen (12), die die Anzahl von Zuständen « 1 » in einem Block zählen, diese Anzahl von Zuständen « 1 » mit der des vorhergehenden Blocks vergleichen und zu der Freigabeschaltung (13) senden können, um sie für das von den ersten Sortiereinrichtungen (11) gesendete Auslösesignal zu sensibilisieren, wenn die Differenz zwischen den Zahlen von Zuständen in den Blöcken positiv und größer als drei geworden ist, Einrichtungen (9) zur Kornfaktorbestimmung, die eine mittlere ganze Zahl von Zuständen, die einer kreisförmigen Punktstelle entsprechen, bestimmen können, und Einordnungseinrichtungen (10), die mit den Einrichtungen (9) zur Kornfaktorbestimmung gekoppelt sind und die Zustände in Gruppen in Kornfaktorgröße verteilen, die Zustände « 1 » in jeder Gruppe zählen und als Antwort nacheinander für jede Gruppe einen Zustand « 1 », wenn mehr als die Hälfte der Zustände in der Gruppe Zustände « 1 » sind, und einen Zustand « 0 » im entgegengesetzten Fall senden können.

# FIG.1

# FIG.6

*FIG.2*

*FIG.3*

*FIG.4*

*FIG.5*